# EUROPEAN PATENT APPLICATION

(11) **EP 4 137 454 A1**
(43) Date of publication of application: **22.02.2023**
(21) Application number: 21787663.0
(22) Date of filing: 12.03.2021
(51) Int. Cl.: C01B 25/45, H01M 4/13, H01M 4/62, H01M 10/052, H01M 10/0562, H01B 1/06, H01B 1/10, H01B 13/00

(54) **SULFIDE INORGANIC SOLID ELECTROLYTE MATERIAL, SOLID ELECTROLYTE, SOLID ELECTROLYTE FILM, AND LITHIUM ION BATTERY**

(30) Priority: 16.04.2020 JP 2020073649; 05.10.2020 JP 2020168520
(71) Applicant: Furukawa Co., Ltd., Chiyoda-ku Tokyo 100-8370 (JP)
(72) Inventor: YOSHIDA Tatsushi, Tsukuba-shi, Ibaraki 305-0856 (JP)
(74) Representative: Müller, Christian Stefan Gerd
(86) International application number: PCT/JP2021/010168
(87) International publication number: WO 2021/210315

(57) **Abstract**

Provided is a sulfide-based inorganic solid electrolyte material having lithium ionic conductivity, in which the sulfide-based inorganic solid electrolyte material has a particle shape, and when a mode diameter in a number average particle size distribution of the sulfide-based inorganic solid electrolyte material that is obtained from an observed image of a scanning electron microscope (SEM) is represented by Dm [pm] and a particle size corresponding to a cumulative frequency of 90% in the number average particle size distribution is represented by D₉₀ [µm], a value of D₉₀/Dm is 1.6 or more and 8.0 or less.

## Description

### TECHNICAL FIELD

The present invention relates to a sulfide-based inorganic solid electrolyte material, a solid electrolyte, a solid electrolyte membrane, and a lithium ion battery.

### BACKGROUND ART

In general, a lithium ion battery is used as a power supply of a small mobile device such as a mobile phone or a laptop. In addition, recently, the lithium ion battery has been used not only as a power supply of a small mobile device but also as a power supply of an electric vehicle, an electric power storage, or the like.

In a currently commercially available lithium ion battery, an electrolytic solution including a combustible organic solvent is used. On the other hand, in a lithium ion battery (hereinafter, also referred to as "all-solid-state lithium ion battery") in which a solid electrolyte is replaced with the electrolytic solution such that the entire battery is made of a solid, a combustible organic solvent is not used in the battery. Therefore, it is considered that a safety device can be simplified and manufacturing costs or productivity is excellent.

As a solid electrolyte material used for the solid electrolyte, for example, a sulfide-based inorganic solid electrolyte material is known.

Patent Document 1 (Japanese Unexamined Patent Publication No. 2016-27545) describes a sulfide-based solid electrolyte material having a peak at a position of 20 = 29.86° ± 1.00° in X-ray diffraction measurement using a CuKα ray and a composition of Li_{2y+3}PS₄ (0.1 ≤ y ≤ 0.175).

### RELATED DOCUMENT

### PATENT DOCUMENT

[Patent Document 1] Japanese Unexamined Patent Publication No. 2016-27545

### SUMMARY OF THE INVENTION

### TECHNICAL PROBLEM

Incidentally, the sulfide-based inorganic solid electrolyte material has excellent electrochemical stability and lithium ionic conductivity. However, the sulfide-based inorganic solid electrolyte material still has lower lithium ionic conductivity than an electrolytic solution and is not sufficiently satisfactory as a solid electrolyte material.

Therefore, for the sulfide-based inorganic solid electrolyte material used for a lithium ion battery, further improvement of lithium ionic conductivity is required while maintaining electrochemical stability.

The present invention has been made in consideration of the above-described circumstances, and an object thereof is to provide a sulfide-based inorganic solid electrolyte material having an excellent balance between electrochemical stability and lithium ionic conductivity.

### SOLUTION TO PROBLEM

The present inventors conducted a thorough investigation on a particle size distribution or the like of a sulfide-based inorganic solid electrolyte material in order to provide a sulfide-based inorganic solid electrolyte material having an excellent balance between electrochemical stability and lithium ionic conductivity. As a result, it was found that, in a sulfide-based inorganic solid electrolyte material where, when a mode diameter in a number average particle size distribution that is obtained from an observed image of a scanning electron microscope (SEM) is represented by Dm [µm] and a particle size corresponding to a cumulative frequency of 90% in the number average particle size distribution is represented by D₉₀ [µm] , a value of D₉₀/Dm is a specific value or more, a balance between electrochemical stability and lithium ionic conductivity is excellent. Based on this finding, the present invention has been completed.

That is, according to the present invention,
there is provided is a sulfide-based inorganic solid electrolyte material having lithium ionic conductivity,
in which the sulfide-based inorganic solid electrolyte material has a particle shape, and
when a mode diameter in a number average particle size distribution of the sulfide-based inorganic solid electrolyte material that is obtained from an observed image of a scanning electron microscope (SEM) is represented by Dm [µm] and a particle size corresponding to a cumulative frequency of 90% in the number average particle size distribution is represented by D₉₀ [pm],
a value of D₉₀/Dm is 1.6 or more and 8.0 or less.

Further, according to the present invention,
there is provided a solid electrolyte including the above-described sulfide-based inorganic solid electrolyte material.

Further, according to the present invention,
there is provided a solid electrolyte membrane including the above-described solid electrolyte as a main component.

Further, according to the present invention,
there is provided a lithium ion battery including:
a positive electrode including a positive electrode active material layer;
an electrolyte layer; and
a negative electrode including a negative electrode active material layer,
in which at least one of the positive electrode active material layer, the electrolyte layer, and the negative electrode active material layer includes the above-described sulfide-based inorganic solid electrolyte material.

Further, according to the present invention,
there is provided a method of manufacturing the above-described sulfide-based inorganic solid electrolyte material, the method including:
a step (A) of preparing a raw material composition of a sulfide-based inorganic solid electrolyte material including lithium sulfide and phosphorus sulfide;
a step (B) of obtaining a sulfide-based inorganic solid electrolyte material in a vitreous state by mechanically processing the raw material composition of the sulfide-based inorganic solid electrolyte material such that the lithium sulfide and the phosphorus sulfide as raw materials are vitrified in a chemical reaction; and
a step (C) of classifying the obtained sulfide-based inorganic solid electrolyte material such that the value of D₉₀/Dm is adjusted to be in a range of 1.6 or more and 8.0 or less.

### ADVANTAGEOUS EFFECTS OF INVENTION

According to the present invention, a sulfide-based inorganic solid electrolyte material having an excellent balance between electrochemical stability and lithium ionic conductivity can be provided.

### BRIEF DESCRIPTION OF THE DRAWINGS

[Fig. 1] It is a cross-sectional view showing an example of a structure of a lithium ion battery according to an embodiment of the present invention.
[Fig. 2] It is a diagram showing number average particle size distributions of sulfide-based inorganic solid electrolyte materials according to Examples and Comparative Examples.
[Fig. 3] It is a diagram showing number average particle size distributions of sulfide-based inorganic solid electrolyte materials according to Examples 5 and 6.

### DESCRIPTION OF EMBODIMENTS

Hereinafter, an embodiment of the present invention will be described using the drawings. In all the drawings, the same components are represented by common reference numerals, and the description thereof will not be repeated. In addition, the diagrams are schematic diagrams, in which a dimensional ratio does not match the actual one. Unless specified otherwise, a numerical range "A to B" represents A or more and B or less.

### [Sulfide-Based Inorganic Solid Electrolyte Material]

First, a sulfide-based inorganic solid electrolyte material according to the present embodiment will be described.

The sulfide-based inorganic solid electrolyte material according to the present embodiment is a sulfide-based inorganic solid electrolyte material having lithium ionic conductivity, in which the sulfide-based inorganic solid electrolyte material has a particle shape, and when a mode diameter in a number average particle size distribution of the sulfide-based inorganic solid electrolyte material that is obtained from an observed image of a scanning electron microscope (SEM) is represented by Dm [µm] and a particle size corresponding to a cumulative frequency of 90% in the number average particle size distribution is represented by D₉₀ [µm], a value of D₉₀/Dm is 1.6 or more and 8.0 or less.

In the sulfide-based inorganic solid electrolyte material according to the present embodiment, by adjusting the value of the D₉₀/Dm to be in the above-described range, lithium ionic conductivity can be improved while maintaining excellent electrochemical stability.

The reason for this is not necessarily clear but is presumed to be as follows.

It is presumed that, when the value of D₉₀/Dm is in the above-described range, the particle size distribution of the sulfide-based inorganic solid electrolyte material is wide, small particles enter into gaps between large particles such that the particles become dense, and thus the contact between the particles is improved such that lithium ionic conductivity is improved. Here, in general, the particle size of the sulfide-based inorganic solid electrolyte material is measured using a laser diffraction scattering particle size distribution measurement method. However, according to an investigation by the present inventors, it was clarified that, since aggregates of the sulfide-based inorganic solid electrolyte material are formed during the measurement such as a laser diffraction scattering particle size distribution measurement method, the particle size of the sulfide-based inorganic solid electrolyte material is not accurately measured.

That is, according to an investigation by the present inventors, it was first found that, by obtaining the particle size of the sulfide-based inorganic solid electrolyte material from an observed image of a scanning electron microscope (SEM), the particle size of the sulfide-based inorganic solid electrolyte material can be accurately evaluated. As a result, it was first found that, by adjusting the value of D₉₀/Dm to be in the above-described range, the lithium ionic conductivity can be improved.

Here, D₉₀ refers to a particle size corresponding to a cumulative value of 90% in a particle size distribution obtained by measuring one-direction tangential diameter (Feret diameter). In addition, the description of the particle size distribution refers to values obtained by measuring particle sizes of 3000 or more particles that are randomly selected from the SEM image.

In the sulfide-based inorganic solid electrolyte material according to the present embodiment, D₉₀/Dm is 1.6 or more and 8.0 or less. From the viewpoint of further improving the lithium ionic conductivity, D₉₀/Dm is preferably 1.8 or more, more preferably 2.0 or more, still more preferably 2.3 or more, and still more preferably 2.5 or more. From the viewpoint of further reducing the thickness of the solid electrolyte membrane obtained from the sulfide-based inorganic solid electrolyte material, D₉₀/Dm is preferably 5.0 or less, more preferably 4.0 or less, and still more preferably 3.5 or less.

In the sulfide-based inorganic solid electrolyte material according to the present embodiment, from the viewpoint of further reducing the thickness of the solid electrolyte membrane obtained from the sulfide-based inorganic solid electrolyte material, the mode diameter Dm is preferably 10.0 um or less, more preferably 8.0 um or less, and still more preferably 6.0 um or less.

The lower limit value of the mode diameter Dm is not particularly limited and, from the viewpoint of handling properties, is, for example, 0.1 um or more and preferably 1.0 um or more.

From the viewpoint of further improving the electrochemical stability and the stability and the handling properties in water or air, it is preferable that the sulfide-based inorganic solid electrolyte material according to the present embodiment includes Li, P, and S as constituent elements.

In addition, in the sulfide-based inorganic solid electrolyte material according to the present embodiment, from the viewpoint of further improving the lithium ionic conductivity, the electrochemical stability, and the stability and the handling properties in water or air, a molar ratio Li/P of the content of Li to the content of P in the sulfide-based inorganic solid electrolyte material is preferably 1.0 or higher and 5.0 or lower, more preferably 2.0 or higher and 4.0 or lower, still more preferably 2.5 or higher and 3.8 or lower, still more preferably 2.8 or higher and 3.6 or lower, still more preferably 3.0 or higher and 3.5 or lower, still more preferably 3.1 or higher and 3.4 or lower, and still more preferably 3.1 or higher and 3.3 or lower, and a molar ratio S/P of the content of S to the content of P is preferably 2.0 or higher and 6.0 or lower, more preferably 3.0 or higher and 5.0 or lower, still more preferably 3.5 or higher and 4.5 or lower, still more preferably 3.8 or higher and 4.2 or lower, still more preferably 3.9 or higher and 4.1 or lower, and still more preferably 4.0.

Here, the contents of Li, P, and S in the sulfide-based inorganic solid electrolyte material according to the present embodiment can be obtained by, for example, ICP Emission Spectroscopy or X-ray analysis.

In the sulfide-based inorganic solid electrolyte material according to the present embodiment, the lithium ionic conductivity measured using an alternating current impedance method under measurement conditions of 27.0°C, an applied voltage of 10 mV, and a measurement frequency range of 0.1 Hz to 7 MHZ is preferably 0.95 × 10⁻³ S·cm⁻¹ or higher, more preferably 1.1 × 10⁻³ S·cm⁻¹ or higher, and still more preferably 1.3 × 10⁻³ S ·cm⁻¹ or higher.

When the lithium ionic conductivity of the sulfide-based inorganic solid electrolyte material according to the present embodiment is the above-described lower limit value or higher, a lithium ion battery having further improved battery characteristics can be obtained. Further, by using the above-described sulfide-based inorganic solid electrolyte material, a lithium ion battery having further improved input and output characteristics can be obtained.

The sulfide-based inorganic solid electrolyte material according to the present embodiment has excellent electrochemical stability. Here, the electrochemical stability refers to, for example, a property in which a material is not likely to be oxidized and reduced in a wide voltage range. More specifically, in the sulfide-based inorganic solid electrolyte material according to the present embodiment, a maximum value of an oxidative decomposition current measured under conditions of temperature of 25°C, a sweep voltage range of 0 to 5 V, and a voltage sweep rate of 5 mV/sec is preferably 0.50 µA or lower, more preferably 0.20 µA or lower, still more preferably 0.10 µA or lower, still more preferably 0.05 µA or lower, and still more preferably 0.03 µA or lower.

When the maximum value of the oxidative decomposition current in the sulfide-based inorganic solid electrolyte material is the above-described upper limit value or lower, the oxidative decomposition of the sulfide-based inorganic solid electrolyte material in the lithium ion battery can be suppressed, which is preferable.

The lower limit value of the maximum value of the oxidative decomposition current in the sulfide-based inorganic solid electrolyte material is not particularly limited and is, for example, 0.0001 µA or higher.

The sulfide-based inorganic solid electrolyte material according to the present embodiment can be used for any application where lithium ionic conductivity is required. In particular, it is preferable that the sulfide-based inorganic solid electrolyte material according to the present embodiment is used for a lithium ion battery. More specifically, the sulfide-based inorganic solid electrolyte material according to the present embodiment is used for a positive electrode active material layer, a negative electrode active material layer, an electrolyte layer, or the like in a lithium ion battery. Further, the sulfide-based inorganic solid electrolyte material according to the present embodiment is suitably used for a positive electrode active material layer, a negative electrode active material layer, a solid electrolyte layer, or the like forming an all-solid-state lithium ion battery, and is more suitably used for a solid electrolyte layer forming an all-solid-state lithium ion battery.

Examples of the all-solid-state lithium ion battery to which the sulfide-based inorganic solid electrolyte material according to the present embodiment is applied include an all-solid-state lithium ion battery in which a positive electrode, a solid electrolyte layer, and a negative electrode are stacked in this order.

### [Method of manufacturing Sulfide-Based Inorganic Solid Electrolyte Material]

Next, a method of manufacturing the sulfide-based inorganic solid electrolyte material according to the present embodiment will be described.

The sulfide-based inorganic solid electrolyte material according to the present embodiment can be obtained, for example, using a manufacturing method including steps (A), (B), and (C) described below. In addition, the method of manufacturing the sulfide-based inorganic solid electrolyte material according to the present embodiment optionally further includes a step (D) described below. The step (D) may be performed before the step (C) or may be performed after the step (C).

Step (A): a step of preparing a raw material composition of a sulfide-based inorganic solid electrolyte material including lithium sulfide and phosphorus sulfide

Step (B) : a step of obtaining a sulfide-based inorganic solid electrolyte material in a vitreous state by mechanically processing the raw material composition of the sulfide-based inorganic solid electrolyte material such that the lithium sulfide and the phosphorus sulfide as raw materials are vitrified in a chemical reaction

Step (C): a step of classifying the obtained sulfide-based inorganic solid electrolyte material such that the value of D₉₀/Dm is adjusted to be in a range of 1.6 or more and 8.0 or less

Step (D) : a step of heating the obtained sulfide-based inorganic solid electrolyte material in the vitreous state such that at least a part thereof is crystallized

### (Step (A) of preparing Raw Material Inorganic Composition)

First, a raw material composition of a sulfide-based inorganic solid electrolyte material including lithium sulfide and phosphorus sulfide as raw materials at a specific ratio is prepared. Here, a mixing ratio between the respective raw materials in the raw material composition is adjusted such that the obtained sulfide-based inorganic solid electrolyte material has a desired composition ratio.

The raw material composition of the sulfide-based inorganic solid electrolyte material may further include lithium nitride.

A method of mixing the respective raw materials is not particularly limited as long as it is a mixing method capable of uniformly mixing the respective raw materials. For example, the raw materials can be mixed using a ball mill, a beads mill, a vibrating mill, an impact crushing device, a mixer (for example, a pug mixer, a ribbon mixer, a tumbler mixer, a drum mixer, or a V-type mixer), a kneader, a twin-screw kneader, an air flow grinder, or the like.

Mixing conditions such as a stirring rate, a processing time, a temperature, a reaction pressure, or a gravitational acceleration applied to the mixture during the mixing of the respective raw materials can be appropriately determined depending on the amount of the mixture processed.

The lithium sulfide used as a raw material is not particularly limited, and a commercially available lithium sulfide may be used. For example, lithium sulfide obtained by reaction of lithium hydroxide and hydrogen sulfide may also be used. From the viewpoint of obtaining the high-purity sulfide-based inorganic solid electrolyte material and suppressing a side reaction, it is preferable that lithium sulfide having little impurities is used.

Here, in the present embodiment, examples of the lithium sulfide include lithium polysulfide. As the lithium sulfide, Li₂S is preferable.

The phosphorus sulfide used as a raw material is not particularly limited. For example, commercially available phosphorus sulfide (for example, P₂S₅, P₄S₃, P₄S₇, or P₄S₅) can be used. From the viewpoint of obtaining the high-purity sulfide-based inorganic solid electrolyte material and suppressing a side reaction, it is preferable that phosphorus sulfide having little impurities is used. As the phosphorus sulfide, P₂S₅ is preferable. In addition, instead of phosphorus sulfide, elemental phosphorus (P) and elemental sulfur (S) at the corresponding molar ratio can also be used. As the elemental phosphorus (P) and the elemental sulfur (S), any phosphorus and any sulfur can be used without any particular limitation as long as they are industrially produced and are commercially available.

Lithium nitride may be used as a raw material. Here, Nitrogen in the lithium nitride is discharged into the system as N₂. Therefore, by using lithium nitride as an inorganic compound that is a raw material, only the Li composition can be increased with respect to the sulfide-based inorganic solid electrolyte material including Li, P, and S as constituent elements.

The lithium nitride according to the present embodiment is not particularly limited, and a commercially available lithium nitride (for example, Li₃N) may be used. For example, lithium nitride obtained by reaction of metallic lithium (for example, Li foil) and nitrogen gas may also be used. From the viewpoint of obtaining the high-purity solid electrolyte material and suppressing a side reaction, it is preferable that lithium nitride having little impurities is used.

### (Step (B) of obtaining Sulfide-Based Inorganic Solid Electrolyte Material in Vitreous State)

Next, the sulfide-based inorganic solid electrolyte material in the vitreous state is obtained by mechanically processing the raw material composition of the sulfide-based inorganic solid electrolyte material such that the lithium sulfide, the phosphorus sulfide, and optionally the lithium nitride as raw materials are vitrified in a chemical reaction.

Here, the mechanical process refers to a process of causing two or more kinds of inorganic compounds to mechanically collide with each other to be vitrified in a chemical reaction, for example, a mechanochemical process. Here, the mechanochemical process refers to a method of vitrifying a target composition while applying a mechanical energy such as a shear force or an impact force.

In addition, in the step (B), it is preferable that the mechanochemical process is a dry mechanochemical process from the viewpoint of realizing the process in an environment where water or oxygen is removed at a high level.

By using the mechanochemical process, the respective raw materials can be mixed while crushing the raw materials into fine particles. Therefore, the contact area of the respective raw materials can be increased. As a result, the reaction of the respective raw materials can be accelerated. The sulfide-based inorganic solid electrolyte material according to the present embodiment can be obtained with higher efficiency.

Here, the mechanochemical process refers to a method of vitrifying a mixing target while applying a mechanical energy such as a shear force, an impact force, or a centrifugal force. Examples of a device (hereinafter, referred to as "vitrification device") for performing the vitrification through the mechanochemical process include: a crusher and disperser such as a ball mill, a beads mill, a vibrating mill, a turbo mill, a mechano-fusion, a disc mill, or a roll mill; a rotation and impact crushing device including a mechanism as a combination of rotation (shearing stress) and impact (compressive stress) represented by a rock drill, a vibration drill, or an impact driver; and a high-pressure grinding roll. In particular, from the viewpoint of efficiently generating a very high impact energy, a ball mill or a beads mill is preferable, and a ball mill is more preferable. In addition, from the viewpoint of obtaining excellent continuous productivity, for example, a roll mill; a rotation and impact crushing device including a mechanism as a combination of rotation (shearing stress) and impact (compressive stress) represented by a rock drill, a vibration drill, or an impact driver; a high-pressure grinding roll; or a vertical mill such as a roller vertical mill or a ball vertical mill is preferable.

In addition, in order to obtain the sulfide-based inorganic solid electrolyte material according to the present embodiment, it is preferable that the step (B) is performed in an atmosphere where the abundance and inflow of water and oxygen are suppressed at a higher level than in the related art. As a result, contact between the raw material composition and water and oxygen can be suppressed at a higher level than in the related art.

Here, the atmosphere where the abundance and inflow of water and oxygen are suppressed at a higher level than that in the related art can be formed, for example, using the following method.

First, a mixing container and a sealed container for a vitrification device are disposed in a glove box. Next, in the glove box, introduction and vacuum evacuation of inert gas such as dry argon gas or dry nitrogen gas having a high purity obtained through a gas purification device are performed multiple times (preferably three or more times) . Here, in the glove box after the operation, the inert gas such as dry argon gas or dry nitrogen gas having a high purity is circulated through the gas purification device such that the oxygen concentration and the water concentration are adjusted to be preferably 1.0 ppm or less, more preferably 0.8 ppm or less, and still more preferably 0.6 ppm or less.

Next, lithium sulfide and phosphorus sulfide are put into the mixing container of the glove box and are subsequently mixed to prepare a raw material composition (refer to the step (A)). Here, the introduction of lithium sulfide and phosphorus sulfide into the mixing container of the glove box is performed in the following procedure. First, in a state where a door in a main body of the glove box is closed, lithium sulfide and phosphorus sulfide are put into a side box of the glove box. Next, in the side box, introduction and vacuum evacuation of inert gas such as dry argon gas or dry nitrogen gas having a high purity introduced from the glove box are performed multiple times (preferably three or more times). Next, the door in the main body of the glove box is opened, lithium sulfide and phosphorus sulfide are put into the mixing container in the main body of the glove box, and the mixing container is sealed.

Next, after mixing lithium sulfide and phosphorus sulfide, the obtained raw material composition is taken out from the mixing container and is transferred to the container for a vitrification device, and the container is sealed.

By performing this operation, the abundance of water and oxygen in the sealed container containing the raw material composition can be suppressed at a higher level than in the related art, and thus, the atmosphere where the abundance of water and oxygen is suppressed at a higher level than in the related art can be formed in the step (B) .

Next, the sealed container containing the raw material inorganic composition is taken out from the glove box. Next, the sealed container is set in the vitrification device disposed in the atmosphere filled with dry gas such as dry argon gas, dry nitrogen gas, or dry air (for example, in a box filled with dry argon gas, dry nitrogen gas, or dry air) for vitrification. Here, during the vitrification, it is preferable to continuously introduce a given amount of dry gas into the atmosphere filled with dry gas. With this configuration, the atmosphere where the inflow of water and oxygen is suppressed at a higher level than in the related art can be formed in the step (B).

In addition, from the viewpoint of suppressing the inflow of water and oxygen in the sealed container at a high level and from the viewpoint of realizing higher airtightness, it is preferable that a packing having excellent sealing performance such as an O-ring or a ferrule packing is used for a lid portion of the sealed container.

Mixing conditions such as a rotation speed, a processing time, a temperature, a reaction pressure, or a gravitational acceleration applied to the raw material inorganic composition during the mechanical process of the raw material inorganic composition can be appropriately determined based on the kind of the raw material inorganic composition or the amount thereof processed. In general, as the rotation speed increases, the glass production rate increases, and as the processing time increases, the glass conversion rate increases.

Typically, when X-ray diffraction analysis is performed using CuKα rays as a radiation source, if a diffraction peak derived from the raw material is lost or decreases, it can be determined that the raw material inorganic composition is vitrified and a desired sulfide-based inorganic solid electrolyte material is obtained.

Here, in the step (B), it is preferable that the vitrification process is performed until the lithium ionic conductivity of the sulfide-based inorganic solid electrolyte material measured using an alternating current impedance method under measurement conditions of 27.0°C, an applied voltage of 10 mV, and a measurement frequency range of 0.1 Hz to 7 MHz is preferably 1.0 × 10⁻⁴ S·cm⁻¹ or higher, more preferably 2.0 × 10⁻⁴ S ·cm⁻¹ or higher, still more preferably 3.0 × 10⁻⁴ S·cm⁻¹ or higher, and still more preferably 4.0 × 10⁻⁴ S·cm⁻¹ or higher. As a result, a sulfide-based inorganic solid electrolyte material having further improved lithium ionic conductivity can be obtained.

### (Step (C) of Adjusting Value of D₉₀/Dm)

Next, the obtained sulfide-based inorganic solid electrolyte material is classified such that the value of D₉₀/Dm is adjusted to be in a range of 1.6 or more and 8.0 or less.

For example, by classifying the obtained sulfide-based inorganic solid electrolyte material to adjust the particle size, a sulfide-based inorganic solid electrolyte material having the desired D₉₀/Dm can be obtained. In addition, the classification method is not particularly limited. For example, at least one classification unit selected from a sieve and air flow classification can be used.

In addition, the sulfide-based inorganic solid electrolyte material can also be further crushed to further adjust the value of D₉₀/Dm. The above-described crushing method is not particularly limited, and a well-known crushing method such as a mixer, air flow crushing, a mortar, a tumbling mill, or a coffee mill can be used.

From the viewpoint of avoiding contact with water in air, it is preferable that crushing or classification is performed in an inert gas atmosphere or a vacuum atmosphere.

### (Step (D)of Crystallizing At Least Part of Sulfide-Based Inorganic Solid Electrolyte Material)

In the method of manufacturing the sulfide-based inorganic solid electrolyte material according to the present embodiment, optionally, a step of crystallizing at least a part of the sulfide-based inorganic solid electrolyte material may be performed. In the step (D), the sulfide-based inorganic solid electrolyte material in the glass ceramic state (also referred to as "crystallized glass") is formed by heating the obtained sulfide-based inorganic solid electrolyte material in the vitreous state such that at least a part of the sulfide-based inorganic solid electrolyte material is crystallized. As a result, a sulfide-based inorganic solid electrolyte material having further improved lithium ionic conductivity can be obtained.

That is, from the viewpoint of obtaining excellent lithium ionic conductivity, it is preferable that the sulfide-based inorganic solid electrolyte material according to the present embodiment is in the glass ceramic state (crystallized glass state).

The temperature at which the sulfide-based inorganic solid electrolyte material in the vitreous state is heated is preferably in a range of 220°C or higher and 500°C or lower and more preferably in a range of 250°C or higher and 350°C or lower.

The time for which the sulfide-based inorganic solid electrolyte material in the vitreous state is heated is not particularly limited as long as it is the time for which the desired sulfide-based inorganic solid electrolyte material in the glass ceramic state can be obtained. For example, the time is in a range of 0.5 hours or longer and 24 hours or shorter and preferably 1 hour or longer and 3 hours or shorter. A heating method is not particularly limited, and examples thereof include a method using a calcination furnace. Conditions such as a temperature or a time during heating can be appropriately adjusted in order to optimize properties of the sulfide-based inorganic solid electrolyte material according to the present embodiment.

In addition, it is preferable that the sulfide-based inorganic solid electrolyte material in the vitreous state is heated, for example, in an inert gas atmosphere. As a result, deterioration (for example, oxidation) of the sulfide-based inorganic solid electrolyte material can be prevented.

Examples of the inert gas when the sulfide-based inorganic solid electrolyte material in the vitreous state is heated include argon gas, helium gas, and nitrogen gas. In order to prevent impurities from being mixed in a product, it is preferable that the purity of the inert gas is as high as possible. In addition, in order to avoid contact with water, the dew point is preferably -70°C or lower and more preferably -80°C or lower. A method of introducing the inert gas into the mixed system is not particularly limited as long as it is a method capable of filling the mixed system with the inert gas atmosphere. Examples of the introduction method include a method of purging inert gas and a method continuously introducing a given amount of inert gas.

In order to obtain the sulfide-based inorganic solid electrolyte material according to the present embodiment, it is important to appropriately adjust the respective steps. The method of manufacturing the sulfide-based inorganic solid electrolyte material according to the present embodiment is not limited to the above-described method. By appropriately adjusting various conditions, the sulfide-based inorganic solid electrolyte material according to the present embodiment can be obtained.

### [Solid electrolyte]

Next, a solid electrolyte according to the present embodiment will be described. The solid electrolyte according to the present embodiment includes the sulfide-based inorganic solid electrolyte material according to the present embodiment.

The solid electrolyte according to the present embodiment is not particularly limited, and components other than the sulfide-based inorganic solid electrolyte material according to the present embodiment may include various solid electrolyte materials other than the sulfide-based inorganic solid electrolyte material according to the present embodiment within a range where the object of the present invention does not deteriorate.

The solid electrolyte according to the present embodiment may include various solid electrolyte materials other than the sulfide-based inorganic solid electrolyte material according to the present embodiment. The solid electrolyte materials other than the sulfide-based inorganic solid electrolyte material according to the present embodiment are not particularly limited as long as they have ionic conductivity and insulating properties. In general, solid electrolyte materials that are used for a lithium ion battery can be used. Examples of the solid electrolyte materials include: an inorganic solid electrolyte material such as a sulfide-based inorganic solid electrolyte material other than the sulfide-based inorganic solid electrolyte material according to the present embodiment, an oxide-based inorganic solid electrolyte material, or other lithium-based inorganic solid electrolyte materials; and an organic solid electrolyte material such as a polymer electrolyte.

Examples of the sulfide-based inorganic solid electrolyte material other than the sulfide-based inorganic solid electrolyte material according to the present embodiment include a Li₂S-P₂S₅ material, a Li₂S-SiS₂ material, a Li₂S-GeS₂ material, a Li₂S-Al₂S₃ material, a Li₂S-SiS₂-Li₃PO₄ material, a Li₂S-P₂S₅-GeS₂ material, a Li₂S-Li₂O-P₂S₅-SiS₂ material, a Li₂S-GeS₂-P₂S₅-SiS₂ material, a Li₂S-SnS₂-P₂S₅-SiS₂ material, a Li₂S-P₂S₅-Li₃N material, a Li₂S_{2+X}-P₄S₃ material, and a Li₂S-P₂S₅-P₄S₃ material. Among these, one kind may be used singly, or two or more kinds may be used in combination.

Among these, the Li₂S-P₂S₅ material is preferable from the viewpoint that it has excellent lithium ionic conductivity and has stability to the extent that decomposition or the like does not occur in a wide voltage range. Here, for example, the Li₂S-P₂S₅ material refers to an inorganic material obtained by a chemical reaction caused by mechanically processing an inorganic composition including at least Li₂S (lithium sulfide) and P₂S₅.

Here, in the present embodiment, examples of the lithium sulfide include lithium polysulfide.

Examples of the oxide-based inorganic solid electrolyte material include: a NASICON type such as LiTi₂(PO₄)₃, LiZr₂(PO₄)₃, or LiGe₂(PO₄)_{3;} a perovskite type such as (La_{0.5+x}Li_{0.5-3x})TiO₃; a Li₂O-P₂O₅ material; and a Li₂O-P₂O₅-Li₃N material.

Examples of the other lithium-based inorganic solid electrolyte material include LiPON, LiNbO₃, LiTaO₃, Li₃PO₄, LiPO₄₋ₓNₓ (x satisfies 0 < x ≤ 1), LiN, LiI, and LISICON.

Further, a glass ceramic obtained by precipitating crystal of the inorganic solid electrolytes can also be used as the inorganic solid electrolyte material.

As the organic solid electrolyte material, a polymer electrolyte such as a dry polymer electrolyte or a gel electrolyte can be used.

As the polymer electrolyte, in general, those that are used for a lithium ion battery can be used.

### [Solid Electrolyte Membrane]

Next, a solid electrolyte membrane according to the present embodiment will be described.

The solid electrolyte membrane according to the present embodiment includes a solid electrolyte including the sulfide-based inorganic solid electrolyte material according to the present embodiment as a main component.

The solid electrolyte membrane according to the present embodiment is used, for example, as a solid electrolyte layer forming an all-solid-state lithium ion battery.

Examples of the all-solid-state lithium ion battery to which the solid electrolyte membrane according to the present embodiment is applied include an all-solid-state lithium ion battery in which a positive electrode, a solid electrolyte layer, and a negative electrode are stacked in this order. In this case, the solid electrolyte layer is formed of the solid electrolyte membrane.

The average thickness of the solid electrolyte membrane according to the present embodiment is preferably 5 pm or more and 500 um or less, more preferably 10 um or more and 200 um or less, and still more preferably 20 um or more and 100 um or less. When the average thickness of the solid electrolyte membrane is the lower limit value or more, the loss of the solid electrolyte or the cracking of the solid electrolyte membrane surface can be further suppressed. In addition, when the average thickness of the solid electrolyte membrane is the upper limit value or less, the impedance of the solid electrolyte membrane can be further decreased. As a result, the battery characteristics of the obtained all-solid-state lithium ion battery can be further improved.

It is preferable that the solid electrolyte membrane according to the present embodiment is a compact obtained by compression-molding the particle-shaped solid electrolyte including the sulfide-based inorganic solid electrolyte material according to the present embodiment. That is, it is preferable that the particle-shaped solid electrolyte is compression-molded to obtain a solid electrolyte membrane having a given strength due to the anchor effect between the solid electrolyte material particles.

By obtaining the compact, the solid electrolyte particles bind to each other, and the strength of the obtained solid electrolyte membrane can be further improved. As a result, the loss of the solid electrolyte or the cracking of the solid electrolyte membrane surface can be further suppressed.

The content of the sulfide-based inorganic solid electrolyte material according to the present embodiment in the solid electrolyte membrane according to the present embodiment is preferably 50 mass% or more, more preferably 60 mass% or more, still more preferably 70 mass% or more, still more preferably 80 mass% or more, still more preferably 90 mass% or more with respect to 100 mass% of the total mass of the solid electrolyte membrane. As a result, the contact between the solid electrolyte particles can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be further improved.

The upper limit of the content of the sulfide-based inorganic solid electrolyte material according to the present embodiment in the solid electrolyte membrane according to the present embodiment is not particularly limited and is, for example, 100 mass% or less.

The planar shape of the solid electrolyte membrane is not particularly limited and can be appropriately selected according to the shape of an electrode or a current collector. For example, the planar shape is rectangular.

In addition, the solid electrolyte membrane according to the present embodiment may include a binder resin. The content of the binder resin is preferably less than 0.5 mass%, more preferably 0.1 mass% or less, still more preferably 0.05 mass% or less, and still more preferably 0.01 mass% or less with respect to 100 mass% of the total mass of the solid electrolyte membrane. In addition, it is more preferable that the solid electrolyte membrane according to the present embodiment does not substantially include the binder resin, and it is most preferable that the solid electrolyte membrane according to the present embodiment does not include the binder resin.

As a result, the contact between the solid electrolyte particles can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be improved.

"Substantially not including the binder resin" represents that the binder resin may be included to the extent that the effect of the present embodiment does not deteriorate. In addition, when an adhesive resin layer is provided between the solid electrolyte layer and the positive electrode or the negative electrode, an adhesive resin derived from the adhesive resin layer present in the vicinity of an interface between the solid electrolyte layer and the adhesive resin layer is excluded from "the binder resin in the solid electrolyte membrane".

In order to bind the inorganic solid electrolyte material particles to each other, the binder resin refers to a binder that is generally used for a lithium ion battery. Examples of the binder resin include polyvinyl alcohol, polyacrylic acid, carboxymethyl cellulose, polytetrafluoroethylene, polyvinylidene fluoride, styrene-butadiene rubber, and polyimide.

The solid electrolyte membrane according to the present embodiment can be obtained, for example, by depositing the particle-shaped solid electrolyte on a cavity surface of a mold or a substrate surface in a film shape and subsequently compress-molding the solid electrolyte deposited in a film shape.

A method of compress-molding the solid electrolyte is not particularly limited. For example, when the particle-shaped solid electrolyte is deposited on a cavity surface of a mold, pressing by a mold and a stamp can be used. When the particle-shaped solid electrolyte is deposited on a substrate surface, pressing, roll pressing, or flat pressing by a mold and a stamp can be used.

The pressure at which the solid electrolyte is compressed is, for example, 10 MPa or higher or 500 MPa or lower.

In addition, optionally, the inorganic solid electrolyte deposited in a film shape may be compressed and heated. The solid electrolyte particles are fused and bound to each other by performing the heating and compressing, and the strength of the obtained solid electrolyte membrane can be further improved. As a result, the loss of the solid electrolyte or the cracking of the solid electrolyte membrane surface can be further suppressed.

The temperature at which the solid electrolyte is heated is, for example, 40°C or higher and 500°C or lower.

### [Lithium Ion Battery]

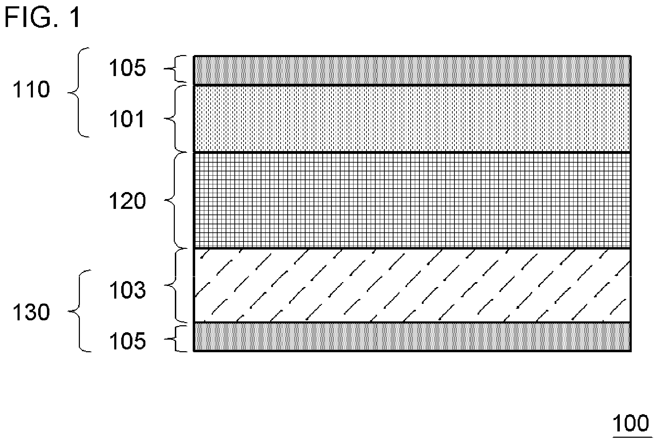

Fig. 1 is a cross-sectional view showing an example of a structure of a lithium ion battery 100 according to an embodiment of the present invention.

The lithium ion battery 100 according to the present embodiment includes: a positive electrode 110 including a positive electrode active material layer 101; an electrolyte layer 120; and a negative electrode 130 including a negative electrode active material layer 103. At least one of the positive electrode active material layer 101, the negative electrode active material layer 103, and the electrolyte layer 120 includes the sulfide-based inorganic solid electrolyte material according to the present embodiment. In addition, it is preferable that all of the positive electrode active material layer 101, the negative electrode active material layer 103, and the electrolyte layer 120 include the sulfide-based inorganic solid electrolyte material according to the present embodiment. In the present embodiment, unless specified otherwise, a layer including a positive electrode active material will be referred to as "the positive electrode active material layer 101". Optionally, the positive electrode 110 may or may not further include a current collector 105 in addition to the positive electrode active material layer 101. In addition, in the present embodiment, unless specified otherwise, a layer including a negative electrode active material will be referred to as "the negative electrode active material layer 103". Optionally, the negative electrode 130 may or may not further include the current collector 105 in addition to the negative electrode active material layer 103.

The shape of the lithium ion battery 100 according to the present embodiment is not particularly limited and may be a cylindrical shape, a coin shape, a square shape, a film shape, or any other shape.

The lithium ion battery 100 according to the present embodiment is manufactured using a generally well-known method. For example, the lithium ion battery 100 is prepared by forming a laminate including the positive electrode 110, the electrolyte layer 120, and the negative electrode 130 in a cylindrical shape, a coin shape, a square shape, a film shape, or any other shape and optionally filling the laminate with a non-aqueous electrolytic solution.

### (Positive Electrode)

The positive electrode 110 is not particularly limited, and a positive electrode that is generally used for a lithium ion battery can be used. The positive electrode 110 is not particularly limited and can be manufactured using a generally well-known method. For example, the positive electrode 110 can be obtained by forming the positive electrode active material layer 101 including the positive electrode active material on a surface of the current collector 105 such as aluminum foil.

The thickness or density of the positive electrode active material layer 101 is appropriately determined depending on the intended use of the battery and, thus can be set based on generally well-known information without any particular limitation.

The positive electrode active material layer 101 includes the positive electrode active material.

The positive electrode active material is not particularly limited, and a generally well-known material can be used. For example, a composite oxide such as a lithium cobalt oxide (LiCoO₂), a lithium nickel oxide (LiNiO₂), a lithium manganese oxide (LiMn₂O₄), a solid solution oxide (Li₂MnO₃-LiMO₂ (M=Co, Ni, or the like)), lithium-manganese- nickel oxide (LiNi_{1/3}Mn_{1/3}Co_{1/3}O₂), or an olivine-type lithium phosphate (LiFePO₄); a conductive polymer such as polyaniline or polypyrrole; a sulfide-based positive electrode active material such as Li₂S, CuS, a Li-Cu-S compound, TiS₂, FeS, MoS₂, a Li-Mo-S compound, a Li-Ti-S compound, a Li-V-S compound, or a Li-Fe-S compound; or a material including sulfur as an active material such as acetylene black impregnated with sulfur, porous carbon impregnated with sulfur, or mixed powder including sulfur and carbon can be used. Among these positive electrode active materials, one kind may be used singly, or two or more kinds may be used in combination.

Among these, from the viewpoints of obtaining higher discharge capacity density and obtaining higher cycle characteristics, a sulfide-based positive electrode active material is preferable, and one kind or two or more kinds selected from a Li-Mo-S compound, a Li-Ti-S compound, and a Li-V-S compound are more preferable.

Here, the Li-Mo-S compound includes Li, Mo, and S as constituent elements and can be typically obtained by a chemical reaction caused by mechanically processing an inorganic composition including molybdenum sulfide and lithium sulfide as raw materials.

In addition, the Li-Ti-S compound includes Li, Ti, and S as constituent elements and can be typically obtained by a chemical reaction caused by mechanically processing an inorganic composition including titanium sulfide and lithium sulfide as raw materials.

The Li-V-S compound includes Li, V, and S as constituent elements and can be typically obtained by a chemical reaction caused by mechanically processing an inorganic composition including vanadium sulfide and lithium sulfide as raw materials.

The positive electrode active material layer 101 is not particularly limited and may include, as components other than the positive electrode active material, for example, one or more materials selected from a binder resin, a thickener, a conductive auxiliary agent, a solid electrolyte material, and the like. Hereinafter, the respective materials will be described.

The positive electrode active material layer 101 may include a binder resin having a function of binding the positive electrode active material particles to each other and binding the positive electrode active material and the current collector 105 to each other. The binder resin according to the present embodiment is not particularly limited as long as it is a typical binder resin that can be used for a lithium ion battery. Examples of the binder resin include polyvinyl alcohol, polyacrylic acid, carboxymethyl cellulose, polytetrafluoroethylene, polyvinylidene fluoride, styrene-butadiene rubber, and polyimide. Among the binders, one kind may be used singly, or two or more kinds may be used in combination.

From the viewpoint of securing the fluidity of a slurry suitable for application, the positive electrode active material layer 101 may include a thickener. The thickener is not particularly limited as long as it is a typical thickener that can be used for a lithium ion battery. Examples of the thickener include a cellulose-based polymer such as carboxymethyl cellulose, methyl cellulose, or hydroxypropyl cellulose and an ammonium salt and an alkali metal salt thereof; and a water-soluble polymer such as polycarboxylic acid, polyethylene oxide, polyvinyl pyrrolidone, polyacrylate, or polyvinyl alcohol. Among the thickeners, one kind may be used singly, or two or more kinds may be used in combination.

From the viewpoint of improving the conductivity of the positive electrode 110 the positive electrode active material layer 101 may include a conductive auxiliary agent. The conductive auxiliary agent is not particularly limited as long as it is a typical conductive auxiliary agent that can be used for a lithium ion battery. Examples of the conductive auxiliary agent include a carbon black such as Acetylene black or Ketjen black and a carbon material such as a vapor-grown carbon fiber.

The positive electrode according to the present embodiment may include a solid electrolyte including the sulfide-based inorganic solid electrolyte material according to the present embodiment or may include a solid electrolyte including a solid electrolyte material other than the sulfide-based inorganic solid electrolyte material according to the present embodiment. The solid electrolyte material other than the sulfide-based inorganic solid electrolyte material according to the present embodiment is not particularly limited as long as they have ionic conductivity and insulating properties. In general, a solid electrolyte material that is used for a lithium ion battery can be used. Examples of the solid electrolyte material include: an inorganic solid electrolyte material such as a sulfide-based inorganic solid electrolyte material, an oxide-based inorganic solid electrolyte material, or other lithium-based inorganic solid electrolyte materials; and an organic solid electrolyte material such as a polymer electrolyte. More specifically, the inorganic solid electrolyte material described above regarding the description of the solid electrolyte according to the present embodiment can be used.

The mixing ratio between various materials in the positive electrode active material layer 101 is appropriately determined depending on the intended use of the battery and, thus can be set based on generally well-known information without any particular limitation.

### (Negative Electrode)

The negative electrode 130 is not particularly limited, and a negative electrode that is generally used for a lithium ion battery can be used. The negative electrode 130 is not particularly limited and can be manufactured using a generally well-known method. For example, the negative electrode 130 can be obtained by forming the negative electrode active material layer 103 including the negative electrode active material on a surface of the current collector 105 such as copper.

The thickness or density of the negative electrode active material layer 103 is appropriately determined depending on the intended use of the battery and, thus can be set based on generally well-known information without any particular limitation.

The negative electrode active material layer 103 includes the negative electrode active material.

The negative electrode active material is not particularly limited as long as it is a typical negative electrode active material that can be used for a negative electrode of a lithium ion battery. Examples of the negative electrode active material include: a carbon material such as natural graphite, artificial graphite, resinous coal, carbon fiber, activated charcoal, hard carbon, or soft carbon; a metal material mainly formed of lithium, a lithium alloy, tin, a tin alloy, silicon, a silicon alloy, gallium, a gallium alloy, indium, an indium alloy, aluminum, or an aluminum alloy; a conductive polymer such as polyacene, polyacetylene, or polypyrrole; and a lithium titanium composite oxide (for example, Li₄Ti₅O₁₂). Among these negative electrode active materials, one kind may be used singly, or two or more kinds may be used in combination.

The negative electrode active material layer 103 is not particularly limited and may include, as components other than the negative electrode active material, for example, one or more materials selected from a binder resin, a thickener, a conductive auxiliary agent, a solid electrolyte material, and the like. These materials are not particularly limited, and examples thereof are the same as those of the materials used for the positive electrode 110.

The mixing ratio between various materials in the negative electrode active material layer 103 is appropriately determined depending on the intended use of the battery and, thus can be set based on generally well-known information without any particular limitation.

### (Electrolyte Layer)

Next, the electrolyte layer 120 will be described. The electrolyte layer 120 is a layer formed between the positive electrode active material layer 101 and the negative electrode active material layer 103.

Examples of the electrolyte layer 120 include a separator impregnated with a non-aqueous electrolytic solution and a solid electrolyte layer including a solid electrolyte.

The separator according to the present embodiment is not particularly limited as long as it has a function of electrically insulating the positive electrode 110 and the negative electrode 130 to allow transmission of lithium ions. For example, a porous membrane can be used.

As the porous membrane, a microporous polymer film is suitably used, and examples of a material thereof include polyolefin, polyimide, polyvinylidene fluoride, and polyester. In particular, a porous polyolefin film is preferable, and specific examples thereof include a porous polyethylene film and a porous polypropylene film.

The non-aqueous electrolytic solution is obtained by dissolving an electrolyte in a solvent.

As the electrolyte, any well-known lithium salt can be used, and the electrolyte may be selected depending on the kind of the active material. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and a lithium lower aliphatic carboxylate.

The solvent in which the electrolyte is dissolved is not particularly limited as long as it is typically used as a liquid in which the electrolyte is dissolved. Examples of the solvent include: a carbonate such as ethylene carbonate (EC), propylene carbonate (PC), butylene carbonate (BC), dimethyl carbonate (DMC), diethyl carbonate (DEC), methyl ethyl carbonate (MEC), or vinylene carbonate (VC); a lactone such as γ-butyrolactone or γ-valerolactone; an ether such as trimethoxy methane, 1,2-dimethoxyethane, diethyl ether, 2-ethoxy ethane, tetrahydrofuran, or 2-methyl tetrahydrofuran; a sulfoxide such as dimethyl sulfoxide; an oxolane such as 1,3-dioxolane or 4-methyl-1,3-dioxolane; a nitrogen-containing solvent such as acetonitrile, nitromethane, formamide, or dimethylformamide; an organic acid ester such as methyl formate, methyl acetate, ethyl acetate, butyl acetate, methyl propionate, or ethyl propionate; a phosphate triester or a diglyme; a triglyme; a sulfolane such as sulfolane or methyl sulfolane; an oxazolidinone such as 3-methyl-2-oxazolidinone; and a sultone such as 1,3-propanesultone, 1,4-butanesultone, or naphthasultone. Among these, one kind may be used singly, or two or more kinds may be used in combination.

The solid electrolyte layer according to the present embodiment is a layer formed between the positive electrode active material layer 101 and the negative electrode active material layer 103, and is formed of a solid electrolyte including a solid electrolyte material. The solid electrolyte in the solid electrolyte layer is not particularly limited as long as it has lithium ionic conductivity. In the present embodiment, it is preferable that the solid electrolyte includes the sulfide-based inorganic solid electrolyte material according to the present embodiment.

The content of the solid electrolyte in the solid electrolyte layer according to the present embodiment is not particularly limited as long as it has a proportion where desired insulating properties can be obtained. For example, the content of the solid electrolyte is in a range of 10 vol% or more and 100 vol% or less and preferably in a range of 50 vol% or more and 100 vol% or less. In particular, in the present embodiment, it is preferable that the solid electrolyte layer is formed of only the solid electrolyte including the sulfide-based inorganic solid electrolyte material according to the present embodiment.

In addition, the solid electrolyte layer according to the present embodiment may include a binder resin. By including the binder resin, a flexible solid electrolyte layer can be obtained. Examples of the binder resin include a fluorine-containing binder such as polytetrafluoroethylene or polyvinylidene fluoride. The thickness of the solid electrolyte layer is, for example, in a range of 0.1 um or more and 1000 um or less and preferably in a range of 0.1 um or more and 300 um or less.

Hereinabove, the embodiment of the present invention has been described. However, the embodiment is merely an example of the present invention, and various configurations other than the above-described configurations can also be adopted.

In addition, the present invention is not limited to the above-described embodiments, and modifications, improvements, and the like within a range where the object of the present invention can be achieved are included in the present invention.

### [Examples]

Hereinafter, the present invention will be described using Examples and Comparative Examples. However, the present invention is not limited to these Examples and Comparative Examples.

### [1] Measurement Method

First, a measurement method in the following Examples and Comparative Examples will be described.

### (1) Particle Size Distribution

Using image processing software (ImageJ, V 1.52a, public free software) published by National Institutes of Health, an SEM image of the obtained sulfide-based inorganic solid electrolyte material was analyzed to obtain a number average particle size distribution. Based on this number average particle size distribution, a mode diameter Dm and a particle size D₉₀ corresponding to a cumulative frequency of 90% were calculated.

In the procedure, first, a carbon tape is bonded to a sample stage of a SEM, and a small amount of the sulfide-based inorganic solid electrolyte material was bonded to the carbon tape such that the particles thereof were thinly spread out. Next, a SEM image of the sulfide-based inorganic solid electrolyte material was obtained. The obtained SEM image was read by ImageJ. Calibration was performed based on scale displayed in the SEM image. Next, the image was converted into binary values of black and white. At this time, a threshold was set to clarify contours of the particles. When particles overlap each other in the obtained monochrome image, the separation of the overlapping of the particles was performed using a watershed method as image processing by ImageJ. By performing particle analysis as image analysis by ImageJ, the results of measuring particle sizes by Feret diameter were obtained. Finally, the results of measuring the obtained particle sizes were read by EXCEL (registered trade name) of spreadsheet software by Microsoft Corporation, the particle sizes were arranged in order from the smallest particle size, and the number of the particles was counted to obtain a particle size distribution.

In each of Examples and Comparative Examples, particle sizes of 3000 or more particles were measured to obtain a number average particle size distribution.

### (2) Measurement of Composition Ratio in Sulfide-Based Inorganic Solid Electrolyte Material

Mass% of each of Li, P, and S in the sulfide-based inorganic solid electrolyte material obtained in each of Examples and Comparative Examples was measured and obtained by ICP emission Spectroscopy using an ICP emission spectrometer (SPS3000, manufactured by Seiko Instruments Inc.). Based on the obtained values, a molar ratio between the respective elements was calculated.

### (3) Measurement of Lithium Ionic Conductivity

In each of the sulfide-based inorganic solid electrolyte materials obtained in each of Examples and Comparative Examples, the lithium ionic conductivity was measured using an alternating current impedance method.

For the measurement of the lithium ionic conductivity, a potentiostat/galvanostat SP-300 (manufactured by Bio-Logic Sciences Instruments) was used. The size of the sample was diameter: 9.5 mm and thickness: 1.2 to 2.0 mm. Measurement conditions were applied voltage: 10 mV, measurement temperature: 27.0°C, and measurement frequency range: 0.1 Hz to 7 MHz, and electrode: Li foil.

Here, 150 mg of the powdery sulfide-based inorganic solid electrolyte material obtained in each of Examples and Comparative Examples was pressed using a press machine at 270 MPa for 10 minutes, and the plate-shaped sulfide-based inorganic solid electrolyte material having a diameter of 9.5 mm and a thickness of 1.2 to 2.0 mm was obtained and used as the sample for the measurement of the lithium ionic conductivity.

### (4) Measurement of Maximum Value of Oxidative Decomposition Current

120 to 150 mg of the powdery sulfide-based inorganic solid electrolyte material obtained in each of Examples and Comparative Examples was pressed using a press machine at 270 MPa for 10 minutes to obtain a plate-shaped sulfide-based inorganic solid electrolyte material (pellet) having a diameter of 9.5 mm and a thickness of 1.3 mm. Next, Li foil as a reference electrode or counter electrode was pressed against on one surface of the obtained pellet under conditions of 18 MPa and 10 minutes, and SUS314 foil as a working electrode adhered closely to another surface of the pellet.

Next, using a potentiostat/galvanostat SP-300 (manufactured by Bio-Logic Sciences Instruments), a maximum value of an oxidative decomposition current of the sulfide-based inorganic solid electrolyte material was obtained under conditions of a temperature of 25°C, a sweep voltage range of 0 to 5 V, and a voltage sweep rate of 5 mV/sec and was evaluated based on the following criteria.
⊚: 0.03 µA or lower
○: higher than 0.03 µA and 0.50 µA or lower
×: higher than 0.50 µA

### [2] Manufacturing of Sulfide-Based Inorganic Solid Electrolyte Material

### <Example 1>

The sulfide-based inorganic solid electrolyte material was prepared according to the following procedure.

Regarding the raw materials, Li₂S (manufactured by Furukawa Co., Ltd., purity: 99.9%), P₂S₅ (manufactured by Kanto Chemical Co., Inc.), and Li₃N (manufactured by Furukawa Co., Ltd.) were used.

Next, in an argon glove box, Li₂S powder, P₂S₅ powder, and Li₃N powder were precisely weighed (Li₂S:P₂S₅: Li₃N = 27:9:2 (molar ratio)), and these powders were mixed in an agate mortar for 10 minutes.

Next, 2 g of the mixed powder was weighed, was put into a zirconia pot (inner volume: 45 mL) with 18 zirconia balls having a diameter φ of 10 mm, and was crushed and mixed (mechanochemical process) using a planetary ball mill (rotation: 800 rpm, revolution: 400 rpm) for 12 hours.

Next, after crushing and mixing, the powder attached to an inner wall of the pot or the balls was scraped, the powder was put again into the same pot together with balls, and was crushed and mixed using a planetary ball mill (rotation: 800 rpm, revolution: 400 rpm) for the same time as described above. As a result, the sulfide-based inorganic solid electrolyte material (Li₁₀P₃S₁₂) in the vitreous state was obtained.

Next, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained.

Next, the obtained sulfide-based inorganic solid electrolyte material in a glass ceramic state was classified through a sieve having a pore size of 20 um.

Each of the obtained sulfide-based inorganic solid electrolyte materials in the glass ceramic state was evaluated. The obtained results are shown in Table 1.

### <Example 2>

400 g of the sulfide-based inorganic solid electrolyte material obtained in Example 1 was weighed, was put into an alumina pot (inner volume: 5 L) together with 6200 g of zirconia balls having a diameter of ϕ 2 mm, and was crushed for 120 hours while being vibrated using a ball mill (rotation speed: 100 rpm) . As a result, a sulfide-based inorganic solid electrolyte material in a vitreous state was obtained. The sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained. Each of the obtained sulfide-based inorganic solid electrolyte materials in the glass ceramic state was evaluated. The obtained results are shown in Table 1.

### <Example 3>

The sulfide-based inorganic solid electrolyte material obtained in Example 2 was classified through a sieve having a pore size of 20 um.

Each of the obtained sulfide-based inorganic solid electrolyte materials in the glass ceramic state was evaluated. The obtained results are shown in Table 1.

### <Example 4>

400 g of the sulfide-based inorganic solid electrolyte material obtained in Example 1 was weighed, was put into an alumina pot (inner volume: 5 L) together with 6200 g of zirconia balls having a diameter of ϕ 2 mm, and was crushed for 24 hours while being vibrated using a ball mill (rotation speed: 100 rpm) . As a result, a sulfide-based inorganic solid electrolyte material in a vitreous state was obtained. The sulfide-based inorganic solid electrolyte material in the vitreous state was annealed in argon at 300°C for 7 hours. As a result, the sulfide-based inorganic solid electrolyte material (Li₁₀P₃S₁₂) was obtained.

Each of the obtained sulfide-based inorganic solid electrolyte materials in the glass ceramic state was evaluated. The obtained results are shown in Table 1.

### <Example 5>

The sulfide-based inorganic solid electrolyte material was prepared according to the following procedure.

Regarding the raw materials, Li₂S (manufactured by Furukawa Co., Ltd., purity: 99.9%), P₂S₅ (manufactured by Kanto Chemical Co., Inc.), and Li₃N (manufactured by Furukawa Co., Ltd.) were used.

Next, in an argon glove box, Li₂S powder, P₂S₅ powder, and Li₃N powder were precisely weighed (Li₂S:P₂S₅: Li₃N = 27:9:2 (molar ratio)), and these powders were mixed in an agate mortar for 10 minutes.

Next, 500 g of the mixed powder was weighed, was put into an alumina pot (inner volume: 5.0 L) together with 7500 g of zirconia balls having a diameter of ϕ 25 mm and 700 g of zirconia balls having a diameter of ϕ 10 mm, and was crushed and mixed (mechanochemically processed) using a ball mill (rotation speed: 100 rpm) for 48 hours.

Next, after crushing and mixing, the powder attached to an inner wall of the pot or the balls was scraped, was put again into the same pot together with balls, and was crushed and mixed using a ball mill (rotation speed: 100 rpm) for the same time as described above. This operation from the scraping to the crushing was repeated for 700 hours in total. As a result, a sulfide-based inorganic solid electrolyte material in a vitreous state was obtained.

Next, 300 g of the obtained sulfide-based inorganic solid electrolyte material was weighed, was put into an alumina pot (inner volume: 5 L) together with 6200 g of zirconia balls having a diameter of ϕ 2 mm, and was crushed for 50 hours while being vibrated using a ball mill (rotation speed: 100 rpm). As a result, a fine sulfide-based inorganic solid electrolyte material in a vitreous state was obtained.

Next, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained.

Next, the obtained sulfide-based inorganic solid electrolyte material in a glass ceramic state was classified through a sieve having a pore size of 20 um.

Each of the obtained sulfide-based inorganic solid electrolyte materials in the glass ceramic state was evaluated. The obtained results are shown in Table 2.

### <Example 6>

A sulfide-based inorganic solid electrolyte material in a glass ceramic state was obtained in the same procedure, except that, instead of crushing 300 g of the sulfide-based inorganic solid electrolyte material in the vitreous state using 6200 g of zirconia balls having a diameter of ϕ2 mm in Example 5, the powder was put into an alumina pot (inner volume: 5 L) together with 1200 g of zirconia balls having a diameter of ϕ 5 mm, 6200 g of zirconia balls having a diameter of ϕ 2 mm, and 1200 g of zirconia balls having a diameter of ϕ 1 mm and was crushed for 50 hours while being vibrated using a ball mill (rotation speed: 100 rpm).

Each of the obtained sulfide-based inorganic solid electrolyte materials in the glass ceramic state was evaluated. The obtained results are shown in Table 2.

### <Comparative Example 1>

400 g of the sulfide-based inorganic solid electrolyte material obtained in Example 1 was weighed, was put into an alumina pot (inner volume: 5 L) together with 6200 g of zirconia balls having a diameter of ϕ 1.5 mm, and was crushed for 24 hours while being vibrated using a ball mill (rotation speed: 100 rpm) . As a result, a sulfide-based inorganic solid electrolyte material in a vitreous state was obtained. The sulfide-based inorganic solid electrolyte material in the vitreous state was annealed in argon at 300°C for 7 hours. As a result, the sulfide-based inorganic solid electrolyte material (Li₁₀P₃S₁₂) was obtained.

Each of the obtained sulfide-based inorganic solid electrolyte materials in the glass ceramic state was evaluated. The obtained results are shown in Table 1.

### <Comparative Example 2>

As in Example 1, the sulfide-based inorganic solid electrolyte material in the vitreous state was annealed in argon at 300°C for 7 hours. As a result, the sulfide-based inorganic solid electrolyte material (Li₁₀P₃S₁₂) in the glass ceramic state was obtained. Next, classification using a sieve was not performed.

Each of the obtained sulfide-based inorganic solid electrolyte materials in the glass ceramic state was evaluated. The obtained results are shown in Table 1.

**[Table 1]**

| | | Example 1 | Example 2 | Example 3 | Example 4 | Comparative Example 1 | Comparative Example 2 |
|---|---|---|---|---|---|---|---|
| Particle Size Distribution | Mode Diameter [µm] | 3.8 | 4.0 | 3.5 | 3.2 | 3.6 | 4.0 |
| | D90 [µm] | 11.5 | 8.5 | 6.5 | 5.1 | 5.5 | 32.8 |
| | D90/Mode Diameter [-] | 3.0 | 2.1 | 1.9 | 1.6 | 1.5 | 8.2 |
| Ion Conductivity [S/cm] | | 1.47 × 10⁻³ | 1.38 × 10⁻³ | 1.19 × 10⁻³ | 1.02 × 10⁻³ | 0.90 × 10⁻³ | 0.94 × 10⁻³ |
| Maximum Value of Oxidative Decomposition Current | | ⊚ | ⊚ | ⊚ | ⊚ | ⊚ | ⊚ |

In the sulfide-based inorganic solid electrolyte materials according to Examples 1 to 4, lithium ionic conductivity and electrochemical stability were excellent. On the other hand, in the sulfide-based inorganic solid electrolyte materials according to Comparative Examples 1 and 2, lithium ionic conductivity was poor.

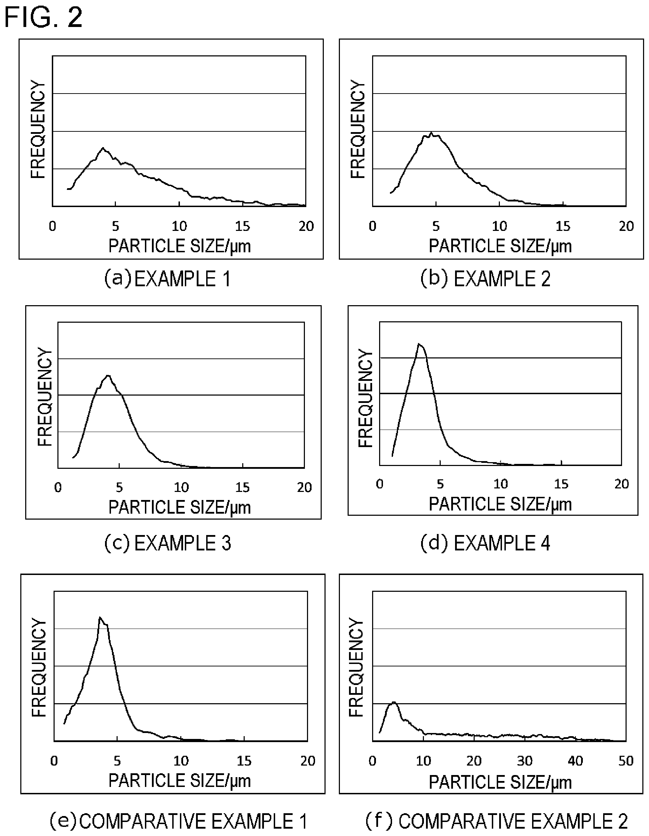

Here, Fig. 2 shows the number average particle size distributions of sulfide-based inorganic solid electrolyte materials according to Examples and Comparative Examples.

**[Table 2]**

| | | Example 5 | Example 6 |
|---|---|---|---|
| Particle Size Distribution | Mode Diameter [µm] | 2.6 | 1.6 |
| | D90 [µm] | 6.2 | 4.1 |
| | D90/Mode Diameter [-] | 2.4 | 2.6 |
| Ion Conductivity [S/cm] | | 1.55 × 10⁻³ | 1.54 × 10⁻³ |
| Maximum Value of Oxidative Decomposition Current | | ⊚ | ⊚ |

In the sulfide-based inorganic solid electrolyte materials according to Examples 5 and 6, lithium ionic conductivity and electrochemical stability were excellent.

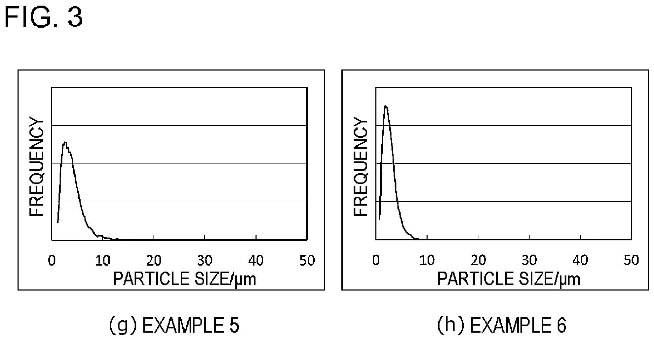

Here, Fig. 3 shows the number average particle size distributions of the sulfide-based inorganic solid electrolyte materials according to Examples 5 and 6.

The present application claims priority based on Japanese Patent Application No. 2020-073649 filed on April 16, 2020 and Japanese Patent Application No. 2020-168520 filed on October 5, 2020, the entire contents of which are incorporated herein by reference.

### REFERENCE SIGNS LIST

- 100:: lithium ion battery
- 101:: positive electrode active material layer
- 103:: negative electrode active material layer
- 105:: current collector
- 110:: positive electrode
- 120:: electrolyte layer
- 130:: negative electrode

## Claims

1. A sulfide-based inorganic solid electrolyte material having lithium ionic conductivity,
wherein the sulfide-based inorganic solid electrolyte material has a particle shape, and
when a mode diameter in a number average particle size distribution of the sulfide-based inorganic solid electrolyte material that is obtained from an observed image of a scanning electron microscope (SEM) is represented by Dm [pm] and a particle size corresponding to a cumulative frequency of 90% in the number average particle size distribution is represented by D₉₀ [pm],
a value of D_{90/}Dm is 1.6 or more and 8.0 or less.

2. The sulfide-based inorganic solid electrolyte material according to claim 1,
wherein the mode diameter Dm is 10.0 um or less.

3. The sulfide-based inorganic solid electrolyte material according to claim 1 or 2 comprising:
Li, P, and S as constituent elements.

4. The sulfide-based inorganic solid electrolyte material according to claim 3,
wherein a molar ratio Li/P of a content of Li to a content of P in the sulfide-based inorganic solid electrolyte material is 1.0 or higher and 5.0 or lower, and a molar ratio S/P of a content of S to the content of P in the sulfide-based inorganic solid electrolyte material is 2.0 or higher and 6.0 or lower.

5. The sulfide-based inorganic solid electrolyte material according to any one of claims 1 to 4,
a sulfide-based inorganic solid electrolyte material that is used for a lithium ion battery.

6. A solid electrolyte comprising the sulfide-based inorganic solid electrolyte material according to any one of claims 1 to 5.

7. A solid electrolyte membrane comprising the solid electrolyte according to claim 6 as a main component.

8. The solid electrolyte membrane according to claim 7, which is a compact obtained by compression-molding the particle-shaped solid electrolyte.

9. The solid electrolyte membrane according to claim 7 or 8,
wherein a content of a binder resin in the solid electrolyte membrane is less than 0.5 mass% with respect to 100 mass% as a total amount of the solid electrolyte membrane.

10. The solid electrolyte membrane according to any one of claims 7 to 9,
wherein a content of the sulfide-based inorganic solid electrolyte material in the solid electrolyte membrane is 50 mass% or more with respect to 100 mass% as a total amount of the solid electrolyte membrane.

11. A lithium ion battery comprising:
a positive electrode including a positive electrode active material layer;
an electrolyte layer; and
a negative electrode including a negative electrode active material layer,
wherein at least one of the positive electrode active material layer, the electrolyte layer, and the negative electrode active material layer includes the sulfide-based inorganic solid electrolyte material according to any one of claims 1 to 5.

12. A method of manufacturing the sulfide-based inorganic solid electrolyte material according to any one of claims 1 to 5, the method comprising:
a step (A) of preparing a raw material composition of a sulfide-based inorganic solid electrolyte material including lithium sulfide and phosphorus sulfide;
a step (B) of obtaining a sulfide-based inorganic solid electrolyte material in a vitreous state by mechanically processing the raw material composition of the sulfide-based inorganic solid electrolyte material such that the lithium sulfide and the phosphorus sulfide as raw materials are vitrified in a chemical reaction; and
a step (C) of classifying the obtained sulfide-based inorganic solid electrolyte material such that the value of D_{90/}Dm is adjusted to be in a range of 1.6 or more and 8.0 or less.

13. The method of manufacturing a sulfide-based inorganic solid electrolyte material according to claim 12,
wherein the raw material composition of the sulfide-based inorganic solid electrolyte material further includes lithium nitride.

14. The method of manufacturing a sulfide-based inorganic solid electrolyte material according to claim 12 or 13,
wherein in the step (C), the sulfide-based inorganic solid electrolyte material is classified using at least one classification unit selected from a sieve and air flow classification.
